# EUROPÄISCHE PATENTSCHRIFT

(11) **EP 1 131 239 B1**
(45) Veröffentlichungstag und Bekanntmachung des Hinweises auf die Patenterteilung: **10.07.2002**
(21) Anmeldenummer: 99972174.9
(22) Anmeldetag: 13.11.1999
(51) Int. Cl.: B62D 5/083

(54) **VERFAHREN ZUM MONTIEREN EINES DREHSCHIEBERVENTILS FÜR HILFSKRAFTLENKUNGEN, INSBESONDERE VON KRAFTFAHRZEUGEN**
METHOD FOR MOUNTING A ROTARY VALVE FOR POWER ASSISTED STEERING SYSTEMS, ESPECIALLY FOR MOTOR VEHICLES
PROCEDE POUR MONTER UNE SOUPAPE A TIROIR ROTATIF POUR DIRECTIONS ASSISTEES, NOTAMMENT D'AUTOMOBILES

(30) Priorität: 18.11.1998 DE 19853142
(43) Veröffentlichungstag der Anmeldung: 12.09.2001
(73) Patentinhaber: ZF Lenksysteme GmbH, 73522 Schwäbisch Gmünd (DE)
(72) Erfinder: RIEGER, Wolfgang, D-73072 Donzdorf (DE)
(86) Internationale Anmeldenummer: EP9908762
(87) Internationale Veröffentlichungsnummer: WO0029272

(56) Entgegenhaltungen:
- EP-A- 0 773 156
- EP-B- 0 440 665

## Beschreibung

Die Erfindung betrifft ein Verfahren zum Montieren eines Drehschieberventils für hydraulische Hilfskraftlenkungen, insbesondere für Kraftfahrzeuge. Das Drehschieberventil enthält ein erstes Ventilelement in der Form eines Drehschiebers und ein zweites Ventilelement in der Form einer Steuerbuchse, die relativ zueinander verdrehbar sind. Die Steuerbuchse und der Drehschieber weisen für die Steuerung eines Druckmittels von einer Druckmittelquelle zu einem Servomotor miteinander zusammenwirkende Steuer-Längsnuten auf. Miteinander zusammenwirkende Steuerkanten der Steuer-Längsnuten der Steuerbuchse und des Drehschiebers sind parallel zueinander ausgebildet. Die Steuerkanten wenigstens der mit der Druckmittelquelle in Verbindung stehenden Steuer-Längsnuten des Drehschiebers sowie die mit diesen zusammenwirkenden Steuerkanten der Steuerbuchse sind in bezug auf die Längsachse des Drehschieberventils im gleichen Winkel schräg aufeinander zulaufend ausgebildet.

Ein Verfahren zum Montieren eines Drehschieberventils für hydraulische Hilfskraftlenkungen mit folgenden Schritten ist bekannt:
- In die mit einem Ventil-Ausgangsglied verdrehfest verbundene Steuerbuchse wird der Drehschieber eingefügt und bis unmittelbar vor einen Anschlag im Bereich des Ventil-Ausgangsgliedes nach innen verschoben,
- die beiden Ventilelemente des Drehschieberventils werden mit Hilfe eines Druckmittels auf ihre Mittenposition ausgerichtet und in dieser Position gegenüber einer Drehstabfeder verdrehsicher verklemmt,
- um den Verlauf einer Kennlinie zu ermitteln, wird das Drehschieberventil nach beiden Seiten voll ausgelenkt und dabei die Druck-/Winkel- oder die Druck-/Momenten-Beziehung festgehalten.

Ein derartiges Verfahren wird beispielsweise angewendet bei der Montage eines Drehschieberventils nach der EP 0 440 665 B1. Mit diesem Drehschieberventil soll die Toleranzfeldbreite der Ventilkennlinien auf ein Minimum reduziert werden.

Im Gegensatz dazu liegt der Erfindung die Aufgabe zugrunde, das bekannte Verfahren zum Montieren eines Drehschieberventils dahingehend zu verbessern, daß mit ein und denselben Bauteilen des Drehschieberventils unterschiedliche Verläufe von Ventilkennlinien erzeugt werden können.

Diese Aufgabe wird durch das im Patentanspruch gekennzeichnete Verfahren zur Montage des Drehschieberventils gelöst. Dadurch kann man das Lenk- und Fahrverhalten eines Fahrzeugs unterschiedlich gestalten, ohne daß dafür unterschiedliche Ventilbauteile erforderlich wären. Die Lösung erfolgt dadurch, daß die ermittelte Grundkennlinie mit einer gewünschten Nominalkennlinie aus einer vorgegebenen Schar von in Software bei einer Montageeinrichtung abgelegten Nominalkennlinien verglichen wird. Der Drehschieber wird in seiner Axialposition so weit verstellt, bis die gewünschte Nominalkennlinie des Drehschieberventils wenigstens in einem vorgegebenen Punkt erreicht ist. Der Drehschieber wird danach endgültig mit der Drehstabfeder verdrehsicher verbunden.

Der unterschiedliche Verlauf der Ventilkennlinien stellt in etwa eine parallele Kurvenschar innerhalb des gewünschten Bereiches dar. Es ist deshalb notwendig, für jeden Fahrzeugtyp einen für das Lenk- und Fahrverhalten wichtigen Kennlinienpunkt auszuwählen. Dazu wird für diesen Punkt der gewünschte Servodruck (hilfsweise für den Einstellvorgang der diesem Druck zugeordnete Ventilaussteuerwinkel) und das dazu passende Lenkmoment über Fahrversuche ermittelt.

Eine für die Justierung der Ventilkennlinie im Lenkventil vorgesehene Einrichtung muß geeignet sein, jeden beliebigen, bei den Fahrversuchen ermittelten Kennlinien-Punkt (definiert über Servodruck und zugeordnetes Lenkmoment) anzusteuern und die Ventilbauteile Drehschieber und Steuerbuchse in diesem Punkt dauerhaft gegeneinander zu fixieren (z. B. durch gegenseitiges Verbohren und Verstiften).

Hierzu ist es erforderlich, durch Koordinatenangaben (von Druck/Moment) den Kennlinien-Justiervorgang über programmierbare Software zu steuern, um so mit identischen Standard-Ventilbauteilen eine Vielzahl unterschiedlicher Kennlinien herzustellen, die im wichtigsten Fahrbeurteilungsbereich punktgenau, d. h. toleranzfrei, herstellbar sind.

Durch dieses Konzept ist es möglich, selbst bei Reduzierung der Ventilbauteil-Vielfalt ein beliebig großes Spektrum von Ventilkennlinien-Verläufen herzustellen. Dies bedeutet eine deutliche Kosteneinsparung. Ein zusätzlicher Vorteil liegt darin, daß dieses Prinzip bei bestimmten Bauteil-Merkmalen dazu dienen kann, bisher infolge enger Toleranzvorgaben teure Fertigungsprozesse zu entfeinern, ohne damit vergrößerte Kennlinien-Toleranzen im Kauf nehmen zu müssen.

Besonders vorteilhaft ist eine solche Möglichkeit bei Personenkraftwagen, die auf dem Plattform-Konzept aufbauen. Hier ist es möglich, das auf einer solchen Plattform aufgesetzte unterschiedliche Fahrzeug mit einer dazu "maßgeschneiderten" Lenkungskennlinie auszurüsten. Dies ist möglich mit absolut identischen Ventilbauteilen, die einer einzigen Basislenkung für diese Plattform entstammen.

Im folgenden wird die Erfindung anhand eines in der Zeichnung dargestellten Ausführungsbeispieles näher erläutert.
Es zeigen:
- Fig. 1: den Längsschnitt durch ein Drehschieberventil, das nach dem erfindungsgemäßen Verfahren montierbar ist, entsprechend der Linie I-I in Fig. 2;
- Fig. 2: einen Querschnit durch das Drehschieberventil der Fig. 1;
- Fig. 3: einen Teil-Längsschnitt entsprechend der Linie III-III in Fig. 2 und
- Fig. 4: eine Schar von Ventilkennlinien bei unterschiedlicher Einbautiefe von Drehschieber und Steuerbuchse.

Das Drehschieberventil, das nach dem erfindungsgemäßen Verfahren montiert werden kann, besteht im wesentlichen aus einem ersten Ventilelement in der Form einer Steuerbuchse 1, in der ein zweites Ventilelement in der Form eines Drehschiebers 2 verdrehbar geführt ist. Die Steuerbuchse 1 weist in ihrem Inneren Steuer-Längsnuten 3 und 4 auf, die mit Steuerkanten 5 und 6 versehen sind. Die Steuer-Längsnuten 3 und 4 stehen mit den beiden Druckräumen eines nicht dargestellten Servomotors in Verbindung.

Der Drehschieber 2 weist Steuer-Längsnuten 7 und 8 auf, die mit einer nicht dargestellten Servopumpe bzw. mit einem nicht dargestellten Behälter in Verbindung stehen. Die Steuer-Längsnuten 7 sind mit Steuerkanten 10 und 11 versehen, die mit den Steuerkanten 5 und 6 zusammenwirken. Die Steuerkanten 10 und 11 sind in bekannter Weise mit Steuerfasen versehen, mit denen eine bestimmte Form der Ventilkennlinie des Drehschieberventils erreicht werden kann.

Die Steuerkanten 5 und 6 der Steuer-Längsnuten 3 und 4 der Steuerbuchse 1 verlaufen konisch zueinander. Ebenso verlaufen die Steuerkanten 10 und 11 der Steuer-Längsnut 7 des Drehschiebers 2 konisch zueinander. Die Steuerkante 5 der Steuerbuchse 1 und die Steuerkante 10 des Drehschiebers 2 sind parallel zueinander ausgebildet. Ebenso ist die Steuerkante 6 der Steuerbuchse 1 parallel zu der Steuerkante 11 des Drehschiebers 2 ausgebildet. Dies bedeutet, daß die Steuerkanten 10, 11 wenigstens der mit der Druckmittelquelle in Verbindung stehenden Steuer-Längsnuten 7 des Drehschiebers 2 sowie die mit diesen zusammenwirkenden Steuerkanten 5, 6 der Steuerbuchse 1 in bezug auf die Längsachse des Drehschieberventils im gleichen Winkel schräg aufeinander zulaufend ausgebildet sind.

Die Steuer-Längsnuten 3 und 4 der Steuerbuchse 1 werden zweckmäßigerweise in einem spanlosen Verfahren der Kaltumformtechnik hergestellt. Dies ist beispielsweise möglich durch Kaltfließpressen oder Rundkneten. Ebenso können die Steuer-Längsnuten 7 und 8 des Drehschiebers 2 spanlos hergestellt werden. Alle Steuer-Längsnuten können jedoch auch spanabhebend hergestellt werden.

Der Drehschieber 2 wird in der Steuerbuchse 1 durch einen Torsionsstab 12 zentriert. Der Torsionsstab 12 ist an jeweils einem Ende mit einem Ventil-Ausgangsglied 13 bzw. der Steuerbuchse 1 bzw. mit dem Drehschieber 2 drehfest verbunden. Die Verbindung erfolgt beispielsweise durch Stifte 14 und 15.

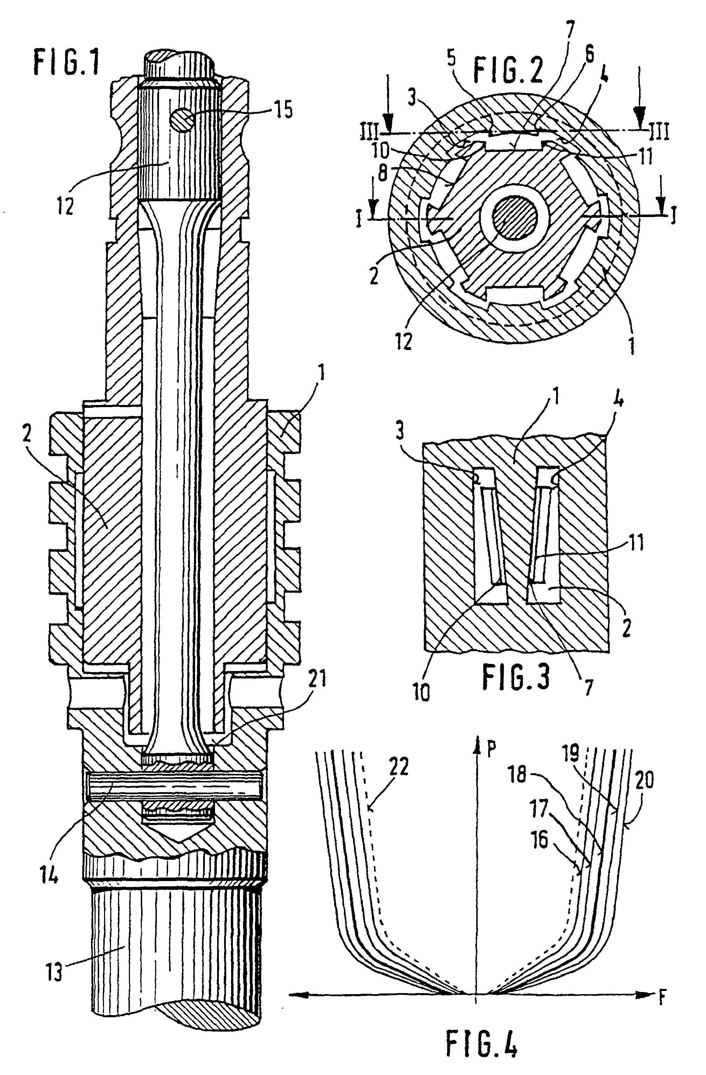

In Fig. 4 ist in einem Diagramm der Arbeitsdruck p einer Hilfskraftlenkung über dem Lenkmoment M am Lenkhandrad aufgetragen. Es sind fünf unterschiedliche Ventilkennlinien 16 17, 18, 19 und 20 dargestellt, deren unterschiedliche Bedeutung im folgenden erläutert wird. Das Drehschieberventil wird nach folgendem Verfahren montiert:

In die mit dem Ventil-Ausgangsglied 13, beispielsweise einem Ritzel einer Zahnstangen-Hilfskraftlenkung oder einer Lenkschnecke einer Kugelmutter-Hilfskraftlenkung, verdrehfest verbundene Steuerbuchse 1 wird der Drehschieber 2 eingefügt und so weit nach innen verschoben, bis er in unmittelbare Nähe einer stirnseitigen Anlage an einem Anschlag 21 im Bereich des Ventil-Ausgangsgliedes 13 gelangt. (Zur Erklärung der "unmittelbare Nähe" sei gesagt, daß der Drehschieber 2 nicht an dem Anschlag 21 anliegen darf, da sonst durch die dabei auftretende Reibung der Einstellvorgang verfälscht werden würde.) Die beiden Ventilelemente, die Steuerbuchse 1 und der Drehschieber 2, werden mit Hilfe eines flüssigen oder gasförmigen Druckmittels auf ihre hydraulische Mittenposition ausgerichtet und in dieser Position gegenüber der Drehstabfeder 12 verdrehsicher verklemmt. Um den Verlauf einer Grundkennlinie 22 zu ermitteln, wird das Drehschieberventil nach beiden Seiten voll ausgelenkt und dabei die Druck-/Winkel- oder die Druck-/Momenten-Beziehung festgehalten.

Danach wird die Grundkennlinie 22 mit einer gewünschten Nominalkennlinie aus einer vorgegebenen Schar von in Software bei einer Montageeinrichtung abgelegten Nominalkennlinien (Ventilkennlinien 16 bis 20) verglichen. Der Drehschieber 2 wird in seiner Axialposition so weit verstellt, bis die gewünschte Nominalkennlinie des Drehschieberventils wenigstens in einem vorgegebenen Punkt erreicht ist. Anschließend wird der Drehschieber 2 endgültig mit der Drehstabfeder 12 verdrehsicher verbunden, beispielsweise durch den Stift 15, durch Einwalzen in eine Kerbverzahnung oder durch eine andere unlösbare Verbindung.

Je nach der axialen Stellung des Drehschiebers 2 zu der Steuerbuchse 1 erhält man unterschiedliche Ventilkennlinien: Wird der Drehschieber 2 nur relativ wenig von dem Anschlag 21 entfernt, so erhält man eine Ventilkennlinie 16. Mit zunehmender Entfernung von dem Anschlag 21 erhält man Ventilkennlinien 17 bis 20.

### Bezugszeichen

- 1: Steuerbuchse
- 2: Drehschieber
- 3: Steuer-Längsnut
- 4: Steuer-Längsnut
- 5: Steuerkante
- 6: Steuerkante
- 7: Steuer-Längsnut
- 8: Steuer-Längsnut
- 9: -
- 10: Steuerkante
- 11: Steuerkante
- 12: Torsionsstab
- 13: Ventil-Ausgangsglied
- 14: Stift
- 15: Stift
- 16: Ventilkennlinie
- 17: Ventilkennlinie
- 18: Ventilkennlinie
- 19: Ventilkennlinie
- 20: Ventilkennlinie
- 21: Anschlag
- 22: Grundkennlinie

## Patentansprüche

1. Verfahren zum Montieren eines Drehschieberventils (1) für hydraulische Hilfskraftlenkungen, insbesondere für Kraftfahrzeuge,
- wobei das Drehschieberventil ein erstes Ventilelement in der Form eines Drehschiebers (2) und ein zweites Ventilelement in der Form einer Steuerbuchse (1) enthält, die relativ zueinander verdrehbar sind,
- wobei die Steuerbuchse (1) und der Drehschieber (2) für die Steuerung eines Druckmittels von einer Druckmittelquelle zu einem Servomotor miteinander zusammenwirkende Steuer-Längsnuten (3, 4, 7, 8) aufweisen,
- wobei miteinander zusammenwirkende Steuerkanten (5, 6, 10, 11) der Steuer-Längsnuten (3, 4, 7, 8) der Steuerbuchse (1) und des Drehschiebers (2) parallel zueinander ausgebildet sind und
- wobei die Steuerkanten (10, 11) wenigstens der mit der Druckmittelquelle in Verbindung stehenden Steuer-Längsnuten (7) des Drehschiebers (2) sowie die mit diesen zusammenwirkenden Steuerkanten (5, 6) der Steuerbuchse (1) in bezug auf die Längsachse des Drehschieberventils im gleichen Winkel schräg aufeinander zulaufend ausgebildet sind,
mit folgenden Schritten:
- in die mit einem Ventil-Ausgangsglied (13) verdrehfest verbundene Steuerbuchse (1) wird der Drehschieber (2) eingefügt und bis unmittelbar vor einen Anschlag (21) im Bereich des Ventil-Ausgangsgliedes (13) nach innen verschoben,
- die beiden Ventilelemente des Drehschieberventils werden mit Hilfe eines Druckmittels auf ihre hydraulische Mittenposition ausgerichtet und in dieser Position gegenüber einer Drehstabfeder (12) verdrehsicher verklemmt,
- um den Verlauf einer Grundkennlinie (22) zu ermitteln, wird das Drehschieberventil nach beiden Seiten voll ausgelenkt und dabei die Druck-/Winkel- oder die Druck-/Momenten-Beziehung festgehalten,
- die Grundkennlinie (22) wird mit einer gewünschten Nominalkennlinie aus einer vorgegebenen Schar von in Software abgelegten Nominalkennlinien (Ventilkennlinien 16 bis 20) verglichen,
- der Drehschieber (2) wird in seiner Axialposition so weit verstellt, bis die gewünschte Nominalkennlinie des Drehschieberventils wenigstens in einem vorgegebenen Punkt erreicht ist,
- der Drehschieber (2) wird endgültig mit der Drehstabfeder (12) verdrehsicher verbunden.

## Claims

1. Method for assembling a rotary valve (1) for hydraulic power assisted steering systems, especially for motor vehicles,
- the rotary valve having a first valve element in the form of a rotary slide (2) and a second valve element in the form of a control bushing (1), which can be rotated relative to one another,
- the control bushing (1) and the rotary slide (2) having longitudinal control grooves (3, 4, 7, 8) that interact with one another to direct a pressure medium from a source of pressure medium to a servomotor,
- interacting control edges (5, 6, 10, 11) of the longitudinal control grooves (3, 4, 7, 8) of the control bushing (1) and the rotary slide (2) being formed parallel to one another and
- the control edges (10, 11) at least of the longitudinal control grooves (7) of the rotary slide (2), which are connected to the source of pressure medium, and the control edges (5, 6) of the control bushing (1), which interact with these, are formed in such a way that they converge in an oblique manner at the same angle in relation to the longitudinal axis of the rotary valve,
having the following steps:
- the rotary slide (2) is inserted into the control bushing (1), which is connected firmly in terms of rotation to a valve output member (13), and displaced inwards to a point just ahead of a stop (21) in the region of the valve output member (13),
- the two valve elements of the rotary valve are aligned in their hydraulic central position with the aid of a pressure medium and are clamped in this position in a manner secure against rotation in relation to a torsion bar spring (12),
- in order to determine the profile of a basic characteristic curve (22), the rotary valve is deflected fully in both directions and the pressure/angle or the pressure/torque ratio is recorded,
- the basic characteristic curve (22) is compared with a desired nominal characteristic curve from a predetermined family of nominal characteristic curves stored in software (valve characteristic curves 16 to 20),
- the axial position of the rotary slide (2) is adjusted until the desired nominal characteristic curve of the rotary valve has been achieved at least at a predetermined point,
- the rotary slide (2) is connected definitively to the torsion bar spring (12) in a manner secure against relative rotation.

## Revendications

1. Procédé de montage d'une vanne de distribution rotative (1) pour des directions assistées hydrauliques, en particulier pour véhicules automobiles,
- dans lequel la vanne de distribution rotative comprend un premier élément de soupape en forme de tiroir rotatif (2) et un deuxième élément de soupape en forme de manchon de commande (1), qui peuvent tourner l'un par rapport à l'autre,
- le manchon de commande (1) et le tiroir rotatif (2) présentant, pour la commande d'un milieu sous pression allant d'une source de milieu sous pression jusqu'à un servomoteur, des rainures longitudinales de commande (3, 4, 7, 8) coopérant les unes avec les autres,
- des arêtes de commande coopérant les unes avec les autres (5, 6, 10, 11) des rainures longitudinales de commande (3, 4, 7, 8) du manchon de commande (1) et du tiroir rotatif (2) étant réalisées parallèlement les unes aux autres et
- les arêtes de commande (10, 11) au moins des rainures longitudinales de commande (7) en relation avec la source de milieu sous pression du tiroir rotatif (2) ainsi que les arêtes de commande (5, 6) du manchon de commande (1) coopérant avec celles-ci étant réalisées de manière à se rapprocher obliquement suivant un angle égal les unes vers les autres par rapport à l'axe longitudinal de la vanne de distribution rotative,
comprenant les étapes suivantes :
- le tiroir rotatif (2) est inséré dans le manchon de commande (1) connecté fixe en rotation à un organe de sortie de soupape (13), et est poussé vers l'intérieur directement jusqu'à une butée (21) dans la région de l'organe de sortie de la soupape (13),
- les deux éléments de soupape de la vanne de distribution rotative sont orientés au moyen d'un milieu sous pression sur leur position médiane hydraulique et sont verrouillés fixes en rotation dans cette position par rapport à un ressort à barre de torsion (12),
- afin de détecter l'allure d'une caractéristique de base (22), la vanne de distribution rotative est complètement articulée des deux côtés et ainsi le rapport pression/angle ou pression/couple est fixé,
- la caractéristique de base (22) est comparée à une caractéristique nominale souhaitée à partir d'un ensemble prédéterminé de caractéristiques nominales saisies dans un logiciel (caractéristiques de soupapes 16 à 20),
- le tiroir rotatif (2) est décalé dans sa position axiale jusqu'à ce que la caractéristique nominale souhaitée de la vanne de distribution rotative soit atteinte au moins dans un point prédéfini,
- le tiroir rotatif (2) est finalement connecté fixe en rotation au ressort à barre de torsion (12).
